# EUROPEAN PATENT SPECIFICATION

(11) **EP 0 418 829 B1**
(45) Date of publication and mention of the grant of the patent: **15.06.1994**
(21) Application number: 90117951.5
(22) Date of filing: 18.09.1990
(51) Int. Cl.: G02B 6/44

(54) **Tape-like coated optical fiber**
Bandförmige beschichtete optische Faser
Fibre optique avec gaine en forme de ruban

(30) Priority: 22.09.1989 JP 247743/89
(43) Date of publication of application: 27.03.1991
(73) Proprietor: SUMITOMO ELECTRIC INDUSTRIES, LTD., Osaka-shi, Osaka 541 (JP)
(72) Inventor: Akasaka, Nobuhiro, c/o Yokohama Works of Sumitomo, Sakae-ku, Yokohama-shi, Kanagawa (JP); Zakoh, Toshiaki, c/o Yokohama Works of Sumitomo, Yokohama-shi, Kanagawa (JP); Yamanishi, Toru, c/o Yokohama Works of Sumitomo, Yokohama-shi, Kanagawa (JP); Katsurashima, Wataru, c/o Yokohama Works of Sumi-, ku, Yokohama-shi, Kanagawa (JP); Ogasawara,Ichiro, c/o Yokohama Works of Sumitomo, Yokohama-shi, Kanagawa (JP)
(74) Representative: Grünecker, Kinkeldey, Stockmair & Schwanhäusser Anwaltssozietät

(56) References cited:
- EP-A- 0 270 854
- EP-A- 0 293 886
- EP-A- 0 349 206
- PATENT ABSTRACTS OF JAPAN, vol. 13, no. 102 (P-841)[3450], 10th March 1989; & JP-A-63 281 109

## Description

The present invention relates to an optical fiber ribbon in which a plurality of optical fiber strands colored for discrimination are arranged side by side in a plane and an overall coating is applied onto the outer periphery of the side-by-side arrangement of the optical fiber strands so as to integrate the optical fiber strands with each other.

Generally, an optical fiber ribbon has such a configuration that a plurality of optical fiber strands each having one or more of protection layers of ultraviolet cured resin provided on an outer periphery of a glass optical fiber are arranged side by side in a plane and an overall coating of ultraviolet cured resin is provided onto an outer periphery of the optical fiber strands so as to integrate the optical fiber strands with each other.

In such an optical fiber ribbon, it is necessary that the optical fiber ribbon is separated into optical fiber strands and the thus separated optical fibers are discriminated from each other for measurement of optical fiber transmission characteristics, attachment of a connector for conversion from a multi-core optical fiber ribbon into single-core optical fiber strands, or the like. There has been proposed an optical fiber ribbon, as disclosed, for example, in Japanese Patent Unexamined Publication No. Sho-63-281109, in which a colored layer formed of ultraviolet cured ink is provided on a coating layer of ultraviolet cured resin of each of the optical fiber strands and a property of separability is given to the overall coating so as to enable its separation from the optical fiber strands without damaging their colored layer.

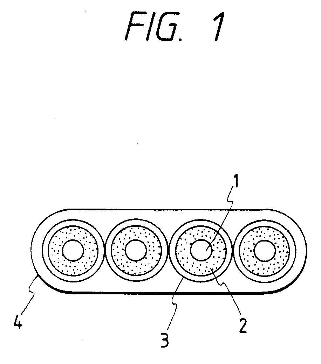

Fig. 1 is a cross section of such an optical fiber ribbon. In the drawing, reference numeral 1 designates a glass optical fiber; 2, a coating layer of ultraviolet cured resin; 3, a colored layer formed of ultraviolet cured ink; and 4, an overall coating of ultraviolet cured resin.

In the foregoing optical fiber ribbon shown in Fig. 1, in view of separation of the optical fiber ribbon into single-core optical fiber strands and discrimination of the separated optical fiber strands, endeavor has been made so as to reduce adhesion between the optical fiber strands and the overall coating by providing the colored layer on the ultraviolet cured resin coating layer of each of the optical fiber strands, such that the adhering power of the overall coating onto each coloured layer is less than the adhering power of the coloured layers onto their respective underlying coating layers.

If such an optical fiber ribbon is exposed to high temperature and humidity, however, there have been problems in that, since a non-cured component and a residual initiator evaporate from each of constituent materials of the coloured layers as they are volatile components and since an overall material exists in the upper layer, vapor permeated up to the overall coating adheres to the partially remaining initiator and sensitizer to partially form dew to cause partial peeling-off between the overall coating and the optical fiber strands which are weak in adhesion so that not only abnormality is caused in the exterior but bending is locally generated in the optical fibers to thereby deteriorate the transmission characteristics.

An object of the present invention is therefore to provide an optical fiber ribbon in which the foregoing problems are solved. The present invention therefore relates to an optical fiber ribbon as defined in claim 1.

As described above in relation with the background of the invention, in the case where, in view of separation of the ribbon into single-core optical fiber strands and discrimination of the separated optical fiber strands, the colored layer is intentionally provided on the ultraviolet cured resin coating of each of the optical fiber strands in a manner such that adhesion of the individual optical fiber strands to the overall coating is reduced, and in the case of use, for each colored layer, of ink having, for example, an ultraviolet curable property, the quantities of the initiator and sensitizer in the UV curable ink are increased so as to increase the degree of curing, so that volatile components of the initiator and the sensitizer and the like remain after curing. Also in the case of using solvent type ink, the solvent remains. Therefore, under conditions of high temperature and high humidity, a large quantity of volatile components evaporate from the ink layer and vapor permeated up to the overall coating forms dew by the foregoing reason between the colored layer and the overall coating to thereby partially cause peeling off.

The inventors of this application has performed various investigations as to the volatile components from the colored layers which cause the foregoing peeling off, and have found that the partial peeling off between the optical fiber strands and the overall coating can be prevented if the quantity of the volatile component(s) in the coloring material is selected to be not larger than 5 wt.% at 60 °C which is the maximum use temperature.

Fig. 1 is a cross section showing an example of an optical fiber ribbon.

A preferred embodiment will be described.

Each of a plurality of single-mode glass optical fibers having a diameter of 125 »m was coated with two layers of two kinds of ultraviolet curable resin (hereinafter, simply referred to as "UV resin") to thereby prepare UV resin coated optical fiber strands (hereinafter, simply referred to as "UV strands"). Ultraviolet curable ink containing volatile components by 10 wt.%, 7 wt.%, and 4.5 wt.% at 60 °C was applied onto the prepared UV strands to thereby obtain colored UV strands each having a diameter of 250 »m, where the weight percentages of the volatile components were measured after the ultraviolet curable ink was cured and heated up to 60°C. The colored UV strands were arranged side by side, and integrated with each other by using UV resin so as to prepare three kinds of optical fiber ribbons. The three kinds of optical fiber ribbons were left as they were in an atmosphere of 60 °C and 95 %RH for a month, and the transmission characteristics and exterior of the optical fiber ribbons were inspected. Table 1 shows the measurement results.

**Table 1**

| | comparative examples | | Invention |
|---|---|---|---|
| | 10% optical fiber ribbon | 7% optical fiber ribbon | 4.5% optical fiber ribbon |
| transmission loss at 1,55»m | 0.46dB/Km | 0.33dB/Km | 0.21dB/Km |
| exterior of optical fiber ribbon | partial peeling off | partial peeling off | no peeling off |

As described above, in the optical fiber ribbon according to the present invention, the contents of the volatile components in the coloring material (ink) constitutive of the colored layers is selected to be not larger than 5 wt.% at 60 °C which is the maximum use temperature, to thereby make it possible to prevent peeling off between the optical fiber strands and the overall coating, which is the weakest point in the structure of the optical fiber ribbon, and therefore to prevent reduction of the transmission characteristics due to said peeling off.

## Claims

1. An optical fiber ribbon, comprising:
a plurality of optical fiber strands arranged side by side in a plane, each of said plurality of optical fiber strands comprising a glass optical fiber, a coating layer of ultraviolet cured resin provided on an outer periphery of said glass optical fiber, and a layer of coloring material provided on said coating layer of ultraviolet cured resin, wherein said coloring material contains at least one volatile component; and
an overall coating of ultraviolet cured resin provided onto an outer periphery of said plurality of optical fiber strands so as to integrate said plurality of optical fiber strands with each other into a ribbon;
characterised in that the weight of said at least one volatile component contained in said coloring material of said colored layers at 60 °C is selected so as to be not larger than 5 % of the weight of said coloring material.

## Patentansprüche

1. Ein Optikfaserband, welches umfaßt:
eine Vielzahl von Optikfasersträngen, die Seite an Seite in einer Ebene angeordnet sind, wobei jeder aus der Vielzahl von Optikfasersträngen eine optische Glasfaser, eine Überzugsschicht aus ultraviolett-härtbarem Harz, die auf der äußeren Peripherie der optischen Glasfaser vorgesehen ist, und eine Schicht aus färbendem Material, die auf der Überzugsschicht aus ultraviolett-härtbarem Harz vorgesehen ist, umfaßt, wobei das färbende Material wenigstens eine flüchtige Komponente enthält; und
eine Gesamtbeschichtung aus ultraviolett-härtbarem Harz, die auf der äußeren Peripherie der Vielzahl von Optikfasersträngen vorgesehen ist, um so die Vielzahl von Optikfasersträngen zu einem Band zusammenzufügen;
**dadurch gekennzeichnet,**
daß das Gewicht der wenigstens einen flüchtigen Komponente, die in dem färbenden Material der gefärbten Schichten enthalten ist, so ausgewählt ist, daß sie bei 60°C nicht mehr als 5 Gewichtsprozent von dem färbenden Material beträgt.

## Revendications

1. Ruban de fibres optiques comprenant :
une pluralité de brins de fibres optiques arrangés côte-à-côte dans un plan, chacun des brins de ladite pluralité de brins de fibres optiques comprenant une fibre optique en verre, une couche de revêtement en résine durcie aux ultraviolets prévue sur une périphérie extérieure de ladite fibre optique en verte et une couche de matériau colorant prévue sur ladite couche de revêtement en résine durcie aux ultraviolets, dans laquelle ledit matériau colorant contient au moins un composant volatil ; et
une gaine de revêtement en résine durcie aux ultraviolets prévue sur une périphérie extérieure de ladite pluralité de brins de fibres optiques afin d'intégrer ladite pluralité de brins de fibres optiques les uns avec les autres en un ruban,
caractérisé en ce que le poids dudit au moins un composant volatil contenu dans ledit matériau colorant desdites couches colorées est choisi de manière à ne pas être supérieur à 5% en poids dudit matériau colorant à 60°C.
